# EUROPÄISCHE PATENTSCHRIFT

(11) **EP 3 672 778 B1**
(45) Veröffentlichungstag und Bekanntmachung des Hinweises auf die Patenterteilung: **13.07.2022**
(21) Anmeldenummer: 18723801.9
(22) Anmeldetag: 08.05.2018
(51) Int. Cl.: B29C 48/305, B29C 48/49, B29C 48/16, B29D 30/00, B29C 48/30, B29C 48/07, B29D 30/52, B29L 30/00

(54) **VORFORM-VORRICHTUNG ZUM POSITIONIEREN VON EXTRUDIERTEN KAUTSCHUKMISCHUNGEN UND EIN DIE VORFORM-VORRICHTUNG AUFWEISENDES EXTRUDER-FORM-SYSTEM ZUM AUSFORMEN VON EXTRUDIERTEN KAUTSCHUKMISCHUNGEN ZU EINEM GESAMTKAUTSCHUKELEMENT SOWIE EINE ENTSPRECHENDE EXTRUDERANLAGE**
PREFORM DEVICE FOR POSITIONING EXTRUDED RUBBER MIXTURES, AND EXTRUDER MOLD SYSTEM COMPRISING THE PREFORM DEVICE FOR MOLDING EXTRUDED RUBBER MIXTURES INTO A COMPLETE RUBBER ELEMENT, AND CORRESPONDING EXTRUDER SYSTEM
DISPOSITIF DE PRÉFAÇONNAGE POUR LE POSITIONNEMENT DE MÉLANGES EXTRUDÉS DE CAOUTCHOUC ET SYSTÈME DE FAÇONNAGE PAR EXTRUSION PRÉSENTANT LE DISPOSITIF DE PRÉFAÇONNAGE POUR LE FAÇONNAGE DE MÉLANGES EXTRUDÉS DE CAOUTCHOUC EN UN ÉLÉMENT GLOBAL EN CAOUTCHOUC AINSI QU'INSTALLATION D'EXTRUSION CORRESPONDANTE

(30) Priorität: 23.08.2017 DE 102017214756
(43) Veröffentlichungstag der Anmeldung: 01.07.2020
(73) Patentinhaber: Continental Reifen Deutschland GmbH, 30165 Hannover (DE)
(72) Erfinder: WICHMANN, Peter, 31535 Neustadt (DE); REINHARDT, Thomas, 30890 Barsighausen (DE); DISSELHOFF, Stephan, 29336 Nienhagen (DE)
(74) Vertreter: Continental Corporation
(86) Internationale Anmeldenummer: PCT/EP2018/061760
(87) Internationale Veröffentlichungsnummer: WO 2019/037901

(56) Entgegenhaltungen:
- EP-A2- 1 604 802
- DE-A1-102004 052 351
- JP-A- H06 210 699
- JP-A- 2015 085 544
- US-A- 4 358 261

## Beschreibung

Die Erfindung betrifft eine Vorform-Vorrichtung zum Positionieren von extrudierten Kautschukmischungen sowie ein Extruder-Form-System zum Ausformen von extrudierten Kautschukmischungen zu einem Gesamtkautschukelement, aufweisend die Vorform-Vorrichtung und mindestens eine Endform-Vorrichtung. Die Erfindung betrifft auch eine Extruderanlage.

In der Kautschukindustrie werden Kautschukmischungen in Extrudern extrudiert und anschließend in einem Extruder-Form-System in ein Gesamtkautschukelement mit einem vorbestimmten Profil geformt. Häufig umfasst das Extruder-Form-System dabei eine Vorform-Vorrichtung und eine Endform-Vorrichtung.

Aus dem Stand der Technik sind Extruder-Form-Systems bekannt. So wird beispielsweise in US 4683095 A eine Extruder-Vorrichtung offenbart, wobei die Extruder-Vorrichtung einen "Pre-Die" und einen "Final Die" aufweist. JP 2015 085544 A offenbart eine Extrudervorrichtung mit einem V-förmigen Block und eine Vorform.

Eine im Stand der Technik bekannte Vorform-Vorrichtung muss häufig in Verbindung mit Endform-Vorrichtung eingesetzt werden, wobei die Vorform-Vorrichtung die Aufgabe hat die einzelnen extrudierten Kautschukmischungen von den Extruderköpfen einer Extruderanlage zu einer vorbestimmten Position an der Endform-Vorrichtung zu führen. Die Endform-Vorrichtungen aus dem Stand der Technik haben anschließend ausschließlich die Funktion des finalen Ausformens der bereits extrudierten Kautschukmischungen und geben so dem resultierenden Gesamtkautschukelement ein vorbestimmtes Profil.

Die Vorform-Vorrichtung ist häufig sehr sperrig und schwer. Zudem muss sie genau an die gleichzeitig verwendete Endform-Vorrichtung angepasst sein, da zur Herstellung eines bestimmten Profils oder einer bestimmten Zusammensetzung eines Gesamtkautschukelements Vorform- und Endform-Vorrichtung aufeinander und zugleich auf die im konkreten Fall verwendete Extrusionslinie abgestimmt sein müssen.

Bei einem Wechsel des herzustellenden Profils des Gesamtkautschukelements oder der Zusammensetzung einzelner Kautschukmischungen ist daher sowohl der Wechsel der gesamten sperrigen Vorform-Vorrichtung als auch der Wechsel der Endform-Vorrichtung nötig. Dieser Wechsel nimmt einen beträchtlichen Zeitaufwand in Anspruch und verringert daher die Produktionszeit in einem signifikanten Maße. Zudem ist die Wartung und Lagerung der verschiedenen Vorform-Vorrichtungen und Endform-Vorrichtungen sehr zeit- bzw. platzaufwendig.

Der Erfindung liegt daher die Aufgabe zugrunde, eine verbesserte Vorform-Vorrichtung oder ein verbessertes Extruder-Form-System bereitzustellen, welche bzw. welches insbesondere
- eine einfachere Wartung der Vorform-Vorrichtung oder des Extruder-Form-Systems und/oder
- einen geringeren Zeitaufwand beim Umstellen der Herstellung in der Extrusionslinie auf ein neues Profil eines Gesamtkautschukelements im Vergleich zu im Stand der Technik bekannten Lösungen ermöglicht.

Gelöst wird diese Aufgabe erfindungsgemäß durch eine Vorform-Vorrichtung nach Anspruch 1.

Es ist vorteilhaft, dass eine erfindungsgemäße Vorform-Vorrichtung aus einem Eingangs- und einem Ausgangsmodul besteht, da die beiden Module in eine Aufnahmevorrichtung einer erfindungsgemäßen Extruderanlage unabhängig voneinander aus unterschiedlichen Richtung eingeführt werden können. Dies ermöglicht, dass nur ein Modul einer erfindungsgemäßen Vorform-Vorrichtung ausgewechselt werden muss. Zudem ist es vorteilhaft, dass die Fläche der Kontaktfläche des Eingangsmoduls kleiner ist als die Fläche der Grundfläche des Eingangsmoduls, da dies eine vereinfachte Einführung des sperrigen Eingangsmoduls in eine Aufnahmevorrichtung einer erfindungsgemäßen Extruderanlage ermöglicht.

Die Fläche der Kontaktfläche des Ausgangsmoduls einer erfindungsgemäßen Vorform-Vorrichtung, nachstehend nur Vorrichtung genannt, kann ebenfalls kleiner als die Fläche der Grundfläche des Ausgangsmoduls oder die Fläche der Grundfläche des Ausgangsmoduls kleiner als die Fläche der Kontaktfläche des Ausgangsmoduls einer erfindungsgemäßen Vorrichtung sein.

Unter den Ausdruck "Vorform-Vorrichtung" fällt im Rahmen der vorliegenden Erfindung ein "Pre-Die". Eine erfindungsgemäße Vorform-Vorrichtung ist dem Fachmann auch unter dem Ausdruck "Preformer" und unter dem Ausdruck "Vorschablone", "Vorleiste" oder "Vorform-Leiste" bekannt.

Unter den Ausdruck "Endform-Vorrichtung" fällt im Rahmen der vorliegenden Erfindung ein "Final Die". Eine Endform-Vorrichtung ist dem Fachmann auch unter dem Ausdruck "Endformer", "Endschablone", "Endleiste" oder "Endform-Leiste" bekannt.

Im Rahmen der vorliegenden Erfindung besteht eine Kautschukkomponente bevorzugt aus einer extrudierten Kautschukmischung.

Im Rahmen der vorliegenden Erfindung ist ein Eingangsmodul einer erfindungsgemäßen Vorform-Vorrichtung der Teil der erfindungsmäßen Vorform-Vorrichtung, welcher die verschiedenen Kautschukkomponenten von den Extruderköpfen einer Extruderanlage hin zu einer möglichst großen Anzahl verschiedener Ausgangsmodule einer Vorform-Vorrichtung führt. Dies hätte den Vorteil, dass das Eingangsmodul einer erfindungsgemäßen Vorform-Vorrichtung gar nicht oder nur in Ausnahmefällen gewechselt werden muss, sobald ein anderes Kautschukprofils hergestellt werden soll.

Im Rahmen der vorliegenden Erfindung ist ein Ausgangsmodul einer erfindungsgemäßen Vorform-Vorrichtung der Teil der erfindungsgemäßen Vorform-Vorrichtung, welcher die verschiedenen Kautschukkomponenten zu einer möglichst großen Anzahl verschiedener Endform-Vorrichtungen führen kann, wie beispielsweise für ein nachstehend beschriebenes erfindungsgemäßes Extruder-Form-System beschrieben. Dies hat den Vorteil, dass das Ausgangsmodul einer erfindungsgemäßen Vorform-Vorrichtung in einer bestimmten Extruderanlage seltener als eine im Stand der Technik bekannten Vorform-Vorrichtung gewechselt werden muss, sobald ein anderes Kautschukprofils herzustellen ist.

Vorteilhaft an den vorstehend beschrieben Aspekten eines Eingangs- und eines Ausgangsmoduls einer erfindungsgemäßen Vorform-Vorrichtung ist, dass nur die Endform-Vorrichtung und sehr selten das Ausgangsmodul der erfindungsgemäßen Vorform-Vorrichtung ausgetauscht werden muss, wobei dieser Wechsel beträchtlich weniger Zeit in Anspruch nimmt als ein Wechsel des gesamten Extruder-Form-Systems, welches aus einer erfindungsgemäßen Vorform-Vorrichtung und einer Endform-Vorrichtung besteht.

Der Wechsel des Ausgangsmoduls kann wie vorstehend beschrieben vorteilhafterweise unabhängig vom Wechsel des Eingangsmoduls geschehen. Dies wird nicht nur durch den modularen Aufbau der erfindungsgemäßen Vorform-Vorrichtung bewirkt, sondern auch dadurch, dass sich die Form des Eingangsmoduls in Richtung des Ausgangsmoduls im Wesentlichen verjüngt. Diese Verjüngung der Form des Eingangsmoduls wird im Rahmen der folgenden bevorzugten erfindungsgemäßen Vorrichtungen genauer beschrieben. Es ist dabei nicht notwendig, dass sich jede Seitenfläche des Eingangsmoduls in Richtung der Kontaktfläche des Eingangsmoduls verjüngt. Zudem muss es sich die verjüngende Seitenfläche eines Eingangsmoduls nicht stetig verjüngen. Abweichungen von dieser Verjüngung können sogar vorteilhaft sein, weil sie das Einführen, das Anbringen oder das Zusammenspiel eines Ausgangsmoduls oder der gesamten erfindungsgemäßen Vorform-Vorrichtung ermöglichen.

Bevorzugt ist eine Vorrichtung wie vorstehend beschrieben, wobei sowohl das Eingangsmodul als auch das Ausgangsmodul jeweils mindestens zwei gegenüberliegende Seitenflächen, eine Grundfläche und eine der Grundfläche gegenüberliegende Kontaktfläche aufweisen und wobei
- die Kontaktfläche des Eingangsmoduls kongruent mit der Kontaktfläche des Ausgangsmoduls ist
   und
- die zwei gegenüberliegende Seitenflächen des Eingangsmoduls jeweils eine trapezförmige Fläche mit einem Verjüngungswinkel ß_{Ein} aufweisen und sich jede der zwei gegenüberliegenden Seitenflächen hin zur Kontaktfläche des Eingangsmoduls verjüngt
   und/oder
- die zwei gegenüberliegende Seitenflächen des Ausgangsmodul jeweils eine trapezförmige Fläche mit einem Verjüngungswinkel ß_{Aus} aufweisen und sich jede der zwei gegenüberliegenden Seitenflächen hin zur Kontaktfläche des Ausgangsmodul verjüngt.

Die Grundfläche und die Kontaktfläche eines Eingangsmoduls einer erfindungsgemäßen Vorform-Vorrichtung liegen sich gegenüber. Die Kanten der Grundfläche und die Kanten der Kontaktfläche grenzen direkt an eine Seitenfläche des Eingangsmoduls. Die Grundfläche des Eingangsmoduls einer erfindungsgemäßen Vorform-Vorrichtung muss so ausgelegt sein, dass die verschiedenen Kautschukkomponenten von den Ausgängen der Fließkanäle des Extruderkopfes einer erfindungsgemäßen Extruderanlage in je einen entsprechenden Eingang der Fließkanäle an der Grundfläche des Eingangsmoduls geleitet werden können. Die Fließkanäle des Eingangsmoduls führen die verschiedenen Kautschukkomponenten von den Eingängen an der Grundfläche des Eingangsmoduls hin zu den jeweiligen Ausgängen der Fließkanäle an der Kontaktfläche des Eingangsmoduls.

Die Grundfläche und die Kontaktfläche eines Ausgangsmoduls einer erfindungsgemäßen Vorform-Vorrichtung liegen sich gegenüber. Die Kanten der Grundfläche und die Kanten der Kontaktfläche grenzen direkt an eine Seitenfläche des Ausgangsmoduls. Die Fließkanäle des Ausgangsmoduls führen die verschiedenen Kautschukkomponenten von den Eingängen an der Kontaktfläche des Ausgangsmoduls hin zu den jeweiligen Ausgängen der Fließkanäle an der Grundfläche des Ausgangsmoduls. Die Grundfläche des Ausgangsmoduls einer erfindungsgemäßen Vorform-Vorrichtung muss so ausgelegt sein, dass die verschiedenen Kautschukkomponenten von den Ausgängen der Fließkanäle an der Grundfläche des Ausgangsmoduls in je einen entsprechenden Eingang der Fließkanäle einer Endform-Vorrichtung geleitet werden können.

Der Vorteil der vorstehend beschrieben Verjüngen der Seitenfläche des Eingangsmoduls oder des Ausgangsmoduls ist die vorstehend beschriebene vereinfachte Einführung des Eingangsmoduls oder des Ausgangsmoduls in eine Aufnahmevorrichtung einer erfindungsgemäßen Extruderanlage und unabhängig voneinander in die Aufnahmevorrichtung eingeführt oder entfernt werden können.

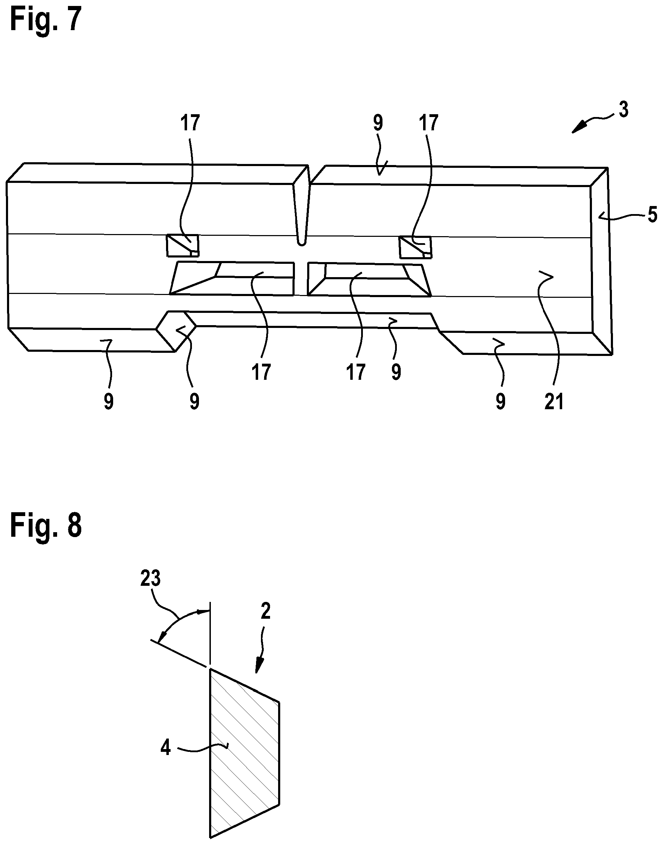

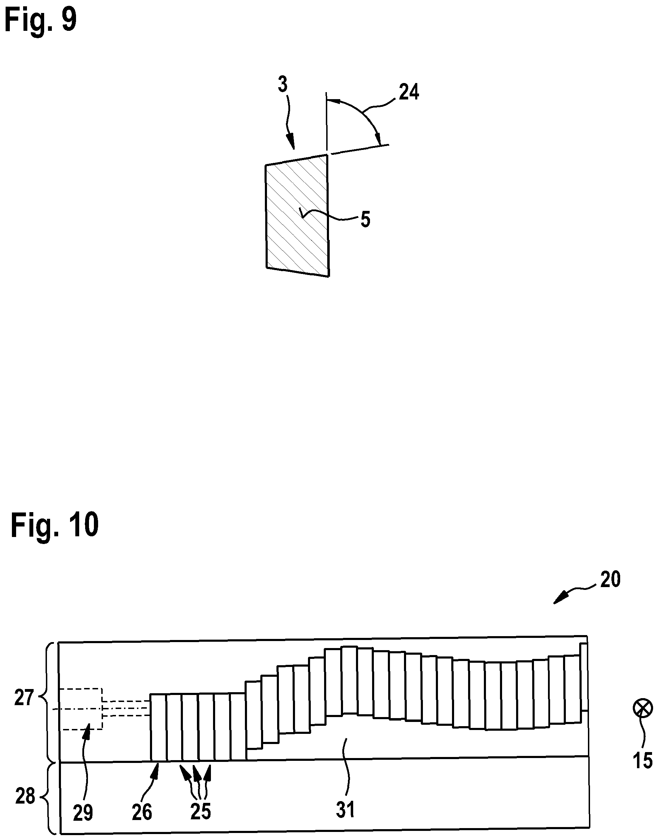

Die trapezförmigen Flächen der Seitenflächen des jeweiligen Moduls werden dabei von einer Kante der Grundfläche des jeweiligen Moduls und einer Kante der Kontaktfläche des jeweiligen Moduls sowie von mindestens zwei Seitenflächenkanten begrenzt, bevorzugt von vier, besonders bevorzugt sechs, ganz besonders bevorzugt acht, insbesondere ganz besonders bevorzugt zehn Seitenflächenkanten. Die Kante der Grundfläche und die Kante der Kontaktfläche des jeweiligen Moduls, welche eine trapezförmige Fläche einer Seitenfläche begrenzen, verlaufen dabei bevorzugt parallel. Zwei der mindestens zwei Seitenflächenkanten verlaufen jedoch nicht parallel. Der Verjüngungswinkel für das Eingangsmodul ß_{Ein} ist in Figur 8 gezeigt und der Verjüngungswinkel für das Ausgangsmodul ß_{Aus} ist in Figur 9 gezeigt. Beide Verjüngungswinkel ß_{Ein} und ß_{Aus} werden von der jeweiligen Kontaktfläche und der jeweiligen Seitenfläche wie in Figur 8 oder Figur 9 gezeigt gebildet.

Bevorzugt ist eine Vorrichtung wie vorstehend beschrieben oder wie vorstehend als bevorzugt beschrieben, wobei
- die Grundfläche des Eingangsmoduls oder des Ausgangsmoduls und Kontaktfläche des Eingangsmoduls oder des Ausgangsmoduls geometrisch ähnlich sind
   und/oder
- die Fläche der Kontaktfläche des Eingangsmoduls geometrisch ähnlich ist mit der Fläche der Kontaktfläche des Ausgangsmoduls.

Der vorstehende Aspekt der vorliegenden Erfindung ist vorteilhaft, da die Anzahl der Kanten der Kontaktfläche des Eingangsmoduls und die Anzahl der Kanten der Kontaktfläche des Ausgangsmoduls gleich groß sind. Dies erleichtert die geometrische Anordnung des Eingangsmoduls relativ zum Ausgangsmodul beim Einführen in die Aufnahmevorrichtung der Extruderanlage.

Im Rahmen der vorliegenden Erfindung bedeutet der Ausdruck "deckungsgleich" oder "kongruent" bevorzugt, dass zwei Flächen durch geeignete Drehung oder Spiegelung deckend übereinandergelegt werden können, oder bevorzugt der mathematischen Definition.

Im Rahmen der vorliegenden Erfindung bedeutet der Ausdruck "geometrisch ähnlich" bevorzugt, dass zwei Flächen mithilfe von elektrischen Streckung so verformt werden können, dass sie deckungsgleich sind, oder bevorzugt der mathematischen Definition.

Besonders bevorzugt ist eine Vorrichtung wie vorstehend beschrieben oder wie vorstehend als bevorzugt beschrieben, wobei
- die Grundfläche des Eingangsmoduls und die Kontaktfläche des Eingangsmoduls geometrisch ähnlich sind
   und/oder
- die Grundfläche des Ausgangsmoduls und die Kontaktfläche des Ausgangsmoduls geometrisch ähnlich sind.

Der vorstehende Aspekt der vorliegenden Erfindung ist vorteilhaft, da die Anzahl der Kanten der Grundfläche eines Moduls und die Anzahl der Kanten einer Kontaktfläche desselben Moduls gleich groß sind. Dies erleichtert die Konstruktion und Herstellung des Eingangsmoduls sowie des Ausgangsmoduls.

Bevorzugt ist eine Vorrichtung wie vorstehend beschrieben oder wie vorstehend als bevorzugt beschrieben, wobei
- die Grundfläche des Eingangsmoduls und die Kontaktfläche des Eingangsmoduls im Wesentlichen rund oder eckig sind
   und/oder
- die Grundfläche des Ausgangsmoduls und die Kontaktfläche des Ausgangsmoduls im Wesentlichen rund oder eckig sind.

Besonders bevorzugt sind die Grundfläche des Eingangsmoduls, die Kontaktfläche des Eingangsmoduls, die Grundfläche des Ausgangsmoduls und die Kontaktfläche des Ausgangsmoduls im Wesentlichen eckig, ganz besonders im Wesentlichen viereckig.

Der vorstehende Aspekt der vorliegenden Erfindung ist vorteilhaft, da eine kantige Ausgestaltung des Eingangsmoduls und des Ausgangsmoduls aufgrund der eckigen Flächen eine erleichterte Einführung des Eingangsmoduls oder des Ausgangsmoduls in die Aufnahmevorrichtung der Extruderanlage ermöglicht. Die Kanten helfen dabei das jeweilige Modul in die Aufnahmevorrichtung einzuführen.

Bevorzugt ist eine Vorrichtung wie vorstehend beschrieben oder wie vorstehend als bevorzugt beschrieben, wobei die Fläche der Kontaktfläche des Eingangsmoduls kongruent ist mit der Fläche der Kontaktfläche des Ausgangsmoduls.

Der vorstehende Aspekt der vorliegenden Erfindung ist vorteilhaft, da sowohl die gesamte Fläche der Kontaktfläche des Eingangsmoduls als auch gesamte Fläche der Kontaktfläche des Ausgangsmoduls dazu benutzt werden können, die verschiedenen Kautschukkomponenten vom Eingangsmodul ins Ausgangsmodul zu befördern. Zudem kann die Konstruktion der Aufnahmevorrichtung der Extruderanlage durch zwei gleichgroße Kontaktflächen vereinfacht werden.

Vorteilhafterweise sind die Kontaktflächen des Eingangsmoduls und des Ausgangsmoduls so beschaffen, dass beide Kontaktflächen abdichtend aufeinander aufliegen. Dazu muss oft ein gewisser Druck, welcher die Kontaktflächen zusammendrückt, aufgewandt werden. Durch die Kongruenz der beiden Kontaktflächen wird gewährleistet, dass bei häufigen Aufeinanderdrücken der beiden Kontaktflächen keine Abdrücke oder andere Materialschäden auf einer der Kontaktflächen entstehen.

Bevorzugt ist eine Vorrichtung wie vorstehend beschrieben oder wie vorstehend als bevorzugt beschrieben, wobei sowohl das Eingangsmodul als auch das Ausgangsmodul jeweils von einer Grundfläche und einer Kontaktfläche, mindestens zwei Seitenflächen begrenzt werden, bevorzugt von vier, besonders bevorzugt sechs, ganz besonders bevorzugt acht, insbesondere ganz besonders bevorzugt zehn oder zwölf Seitenflächen.

Dadurch dass sich sowohl zwei Seitenflächen des Eingangsmoduls als auch zwei Seitenflächen des Ausgangsmoduls hin zur jeweiligen Kontaktfläche verjüngen, ist es möglich, aus entgegengesetzten Richtungen sowohl das Eingangsmodul als auch das Ausgangsmodul in die Aufnahmevorrichtung einer erfindungsgemäßen Extruderanlage einzuführen und zu befestigen.

Um das Eingangsmodul in die dazu vorgesehene Aufnahmevorrichtung einer erfindungsgemäßen Extruderanlage einzuführen ist es notwendig, dass die Aufnahmevorrichtung von dem Extruderkopf getrennt wird, um anschließend das Eingangsmodul in die Aufnahmevorrichtung einzuführen. Die Trennung vom Extruderkopf kann einen beträchtlichen Zeitaufwand in Anspruch nehmen und ist in im Stand der Technik bekannten Vorform-Vorrichtungen bei einem Wechsel des Kautschukprofils nicht zu vermeiden. Durch den modularen Aufbau einer erfindungsgemäßen Vorform-Vorrichtung ist es jedoch nur sehr selten nötig, das Eingangsmodul auszuwechseln, wodurch eine beträchtliche Menge an Zeit bei einem Wechsel des Kautschukprofils und somit einem Wechsel der Vorform-Vorrichtung gespart werden kann.

Beim Wechsel des Kautschukprofils muss bei Einsatz einer erfindungsgemäßen Vorform-Vorrichtung nur die Endform-Vorrichtung und das Ausgangsmodul der erfindungsgemäßen Vorform-Vorrichtung entfernt werden. Das Auswechseln eines Ausgangsmoduls einer erfindungsgemäßen Vorform-Vorrichtung und einer Endform-Vorrichtung nimmt jedoch einem bedeutend einem Zeitaufwand in Anspruch als das Auswechseln einer aus dem Stand der Technik bekannten sperrigen Vorform-Vorrichtung sowie einer aus dem Stand der Technik bekannten Endform-Vorrichtung.

Die Verjüngungswinkel ß_{Ein} müssen nicht für beide der zwei gegenüberliegenden Seitenflächen betragsmäßig gleich sein, sondern der Verjüngungswinkel der einen Seitenfläche kann betragsmäßig einen anderen Wert als der Verjüngungswinkel der anderen Seitenfläche aufweisen. Entsprechendes gilt für die Verjüngungswinkel ß_{Aus} der zwei gegenüberliegenden Seitenflächen des Ausgangsmoduls.

Die Kontaktfläche des Eingangsmoduls einer erfindungsgemäßen Vorform-Vorrichtung muss so ausgelegt sein, dass die verschiedenen Kautschukkomponenten von den Ausgängen der Fließkanäle des Eingangsmoduls in je einen entsprechenden Eingang der Fließkanäle des Ausgangsmoduls geleitet werden können.

Bevorzugt ist die Kontaktfläche des Eingangsmoduls einer erfindungsgemäßen Vorform-Vorrichtung kongruent und/oder flächengleich mit der Kontaktfläche des Ausgangsmoduls einer erfindungsgemäßen Vorform-Vorrichtung, so dass die beiden Kontaktflächen nach Einführung in die Aufnahmevorrichtung einer erfindungsgemäßen Extruderanlage flächendeckend aneinander anliegen.

Bevorzugt ist eine Vorrichtung wie vorstehend beschrieben oder wie vorstehend als bevorzugt beschrieben, wobei
- das Gesamtgewicht der Vorform-Vorrichtung mehr als 25 kg beträgt, bevorzugt mehr als 27 kg,
   und
- das Gesamtgewicht des Ausgangsmoduls der Vorform-Vorrichtung weniger als 20 kg beträgt, bevorzugt weniger als 15 kg.

Der vorstehend beschriebene Aspekt der vorliegenden Erfindung hat den Vorteil, dass leichtere Ausgangsmodule ergonomischer auszuwechseln sind.

Bevorzugt ist eine Vorrichtung wie vorstehend beschrieben oder wie vorstehend als bevorzugt beschrieben, wobei sowohl das Eingangsmodul als auch das Ausgangsmodul zumindest
- einen zur Anordnung einer ersten Kautschukkomponente vorgesehenen ersten Fließkanal,
- einen zur Anordnung einer zweiten Kautschukkomponente vorgesehenen zweiten Fließkanal
und
- einen zur Anordnung einer dritten Kautschukkomponente vorgesehenen dritten Fließkanal
aufweist.

Der vorstehend beschriebene Aspekt der vorliegenden Erfindung hat den Vorteil, dass es beim Vorhandensein von drei Kautschukkomponenten eine recht große Anzahl von verschiedenen Kombinationen der Kautschukkomponenten zu einem Kautschukprofil gibt, zwischen denen in der Regel häufig hin und her gewechselt werden muss. Die Zeitersparnis ist somit bei Vorform-Vorrichtungen mit mindestens drei Fließkanälen, wie beispielsweise bei Vorform-Vorrichtungen für Laufstreifen für Reifen, ein besonders großer Vorteil.

Bevorzugt ist eine Vorrichtung wie vorstehend beschrieben oder wie vorstehend als bevorzugt beschrieben, wobei sowohl das Eingangsmodul als auch das Ausgangsmodul zumindest
- einen zur Anordnung einer vierten Kautschukkomponente vorgesehenen vierten Fließkanal,
   und/oder
- einen zur Anordnung einer fünften Kautschukkomponente vorgesehenen fünften Fließkanal
aufweist.

Der vorstehend beschriebene Aspekt der vorliegenden Erfindung hat den Vorteil, dass das Auswechseln der Vorform-Vorrichtung bei Quadruplex- und Quintuplex-Extruderanlagen zeitaufwändiger ist als beim Extrudieren von lediglich drei Kautschukkoponenten und somit bei Verwendung einer erfindungsgemäßen Vorform-Vorrichtung ebenfalls Zeit gespart wird. Zudem werden bei dem Einsatz von Quadruplex- und Quintuplex-Extruderanlagen die herzustellenden Kautschukprofile besonders häufig gewechselt, zum Beispiel weil eine geringere Stückzahl pro Produktserie gefordert sein kann.

Bevorzugt ist eine Vorrichtung wie vorstehend beschrieben oder wie vorstehend als bevorzugt beschrieben, wobei das Eingangsmodul und/oder das Ausgangsmodul der Vorform-Vorrichtung dazu geeignet sind, an der Aufnahmevorrichtung einer Extruderanlage mittels einer Befestigungsvorrichtung befestigt zu werden.

Der vorstehend beschriebene Aspekt der vorliegenden Erfindung hat den Vorteil, dass sowohl das Eingangsmodul als auch das Ausgangsmodul unabhängig voneinander in der Aufnahmevorrichtung befestigt werden können. Eine Befestigung des Eingangsmoduls oder des Ausgangsmoduls kann mithilfe von Exzenter-Verriegelung als Befestigungsvorrichtung durchgeführt werden. Dies dient insbesondere zur Sicherung des Eingangsmoduls und des Ausgangsmoduls.

Besonders bevorzugt ist eine Vorrichtung wie vorstehend beschrieben oder wie vorstehend als bevorzugt beschrieben, wobei das Eingangsmodul der Vorform-Vorrichtung eine Länge im Bereich von 300 mm bis 1200 mm aufweist, bevorzugt im Bereich von 400 mm bis 800 mm, besonders bevorzugt im Bereich von 450 mm bis 550 mm, ganz besonders bevorzugt 500 mm.

Die Länge des Eingangsmoduls einer erfindungsmäßen Vorform-Vorrichtung ist bevorzugt die maximale horizontale Erstreckung der Grundfläche des Eingangsmoduls während des Positionierens von extrudierten Kautschukmischungen mittels einer erfindungsgemäßen Vorform-Vorrichtung in der Extruderanlage. Besonders bevorzugt verläuft die Länge senkrecht zur Höhe und zur Tiefe des Eingangsmoduls wie nachstehend beschreiben.

Besonders bevorzugt ist eine Vorrichtung wie vorstehend beschrieben oder wie vorstehend als bevorzugt beschrieben, insbesondere wie vorstehend als besonders bevorzugt beschrieben, wobei das Eingangsmodul der Vorform-Vorrichtung eine Höhe im Bereich von 60 mm bis 300 mm aufweist, bevorzugt im Bereich von 80 bis 270 mm, ganz besonders bevorzugt im Bereich von 120 bis 250 mm.

Die Höhe des Eingangsmoduls einer erfindungsmäßen Vorform-Vorrichtung ist bevorzugt die maximale vertikale Erstreckung der Grundfläche des Eingangsmoduls während des Positionierens von extrudierten Kautschukmischungen mittels einer erfindungsgemäßen Vorform-Vorrichtung in der Extruderanlage. Besonders bevorzugt ist die Höhe des Eingangsmoduls einer erfindungsmäßen Vorform-Vorrichtung der Abstand zwischen den beiden geometrischen Mittelpunkten der zwei gegenüberliegenden Seitenflächen mit einer trapezförmigen Fläche.

Besonders bevorzugt ist eine Vorrichtung wie vorstehend beschrieben oder wie vorstehend als bevorzugt beschrieben, insbesondere wie vorstehend als besonders bevorzugt beschrieben, wobei das Eingangsmodul der Vorform-Vorrichtung eine Tiefe im Bereich von 40 mm bis 150 mm, bevorzugt im Bereich von 50 bis 100 mm aufweist, besonders bevorzugt im Bereich von 60 mm.

Die Tiefe des Eingangsmoduls erstreckt sich bevorzugt in Extrusionsrichtung und ist besonders bevorzugt der Abstand vom geometrischen Mittelpunkt der Kontaktfläche des Eingangsmoduls bis zum geometrischen Mittelpunkt der Grundfläche des Eingangsmoduls. Besonders bevorzugt ist eine Vorrichtung wie vorstehend beschrieben oder wie vorstehend als bevorzugt beschrieben, insbesondere wie vorstehend als besonders bevorzugt beschrieben, wobei das Eingangsmodul der Vorform-Vorrichtung einen Verjüngungswinkel ß_{Ein} im Bereich von 30 bis 60° aufweist, besonders bevorzugt im Bereich von 30 bis 45°, bevorzugt von 30,5°.

Der Verjüngungswinkel ß_{Ein} ist bevorzugt der Winkel wie er vorstehend definiert wurde.

Der vorstehend beschriebene Aspekt der vorliegenden Erfindung hat den Vorteil, dass bei Verwendung der vorstehend beschriebenen Bereiche kein besonders großer Druck auf die Kautschukkomponenten ausgeübt werden muss, um die jeweilige Kautschukkomponente durch ihren Fließkanal zu pressen.

Insbesondere bevorzugt ist eine Vorrichtung wie vorstehend beschrieben oder wie vorstehend als bevorzugt beschrieben, insbesondere wie vorstehend als insbesondere bevorzugt beschrieben, wobei das Ausgangsmodul der Vorform-Vorrichtung eine Länge im Bereich von 300 mm bis 1200 mm aufweist, bevorzugt im Bereich von 400 mm bis 800 mm, besonders bevorzugt im Bereich von 450 mm bis 550 mm, ganz besonders bevorzugt 500 mm.

Die Länge des Ausgangsmoduls einer erfindungsmäßen Vorform-Vorrichtung ist bevorzugt die maximale horizontale Erstreckung der Grundfläche des Ausgangsmoduls während des Positionierens von extrudierten Kautschukmischungen mittels einer erfindungsgemäßen Vorform-Vorrichtung in der Extruderanlage. Besonders bevorzugt verläuft die Länge senkrecht zur Höhe und zur Tiefe des Ausgangsmoduls.

Insbesondere bevorzugt ist eine Vorrichtung wie vorstehend beschrieben oder wie vorstehend als bevorzugt beschrieben, insbesondere wie vorstehend als insbesondere bevorzugt beschrieben, wobei das Ausgangsmodul der Vorform-Vorrichtung eine Höhe im Bereich von 60 mm bis 300 mm aufweist, bevorzugt im Bereich von 100 bis 250 mm, ganz besonders bevorzugt im Bereich von 170 bis 220 mm.

Die Höhe des Ausgangsmoduls der erfindungsmäßen Vorform-Vorrichtung ist bevorzugt die maximale vertikale Erstreckung der Grundfläche des Ausgangsmoduls während des Positionierens von extrudierten Kautschukmischungen mittels einer erfindungsgemäßen Vorform-Vorrichtung in der Extruderanlage. Besonders bevorzugt ist die Höhe des Ausgangsmoduls einer erfindungsmäßen Vorform-Vorrichtung der Abstand zwischen den beiden geometrischen Mittelpunkten der zwei gegenüberliegenden Seitenflächen mit einer trapezförmigen Fläche.

Insbesondere bevorzugt ist eine Vorrichtung wie vorstehend beschrieben oder wie vorstehend als bevorzugt beschrieben, insbesondere wie vorstehend als insbesondere bevorzugt beschrieben, wobei das Ausgangsmodul der Vorform-Vorrichtung eine Tiefe im Bereich von 40 mm bis 150 mm aufweist, bevorzugt im Bereich von 50 bis 100 mm, besonders bevorzugt im Bereich von 50 mm bis 70 mm.

Die Tiefe des Ausgangsmoduls ist bevorzugt der Abstand vom geometrischen Mittelpunkt der Kontaktfläche des Ausgangsmoduls bis zum geometrischen Mittelpunkt der Grundfläche des Ausgangsmoduls.

Insbesondere bevorzugt ist eine Vorrichtung wie vorstehend beschrieben oder wie vorstehend als bevorzugt beschrieben, insbesondere wie vorstehend als insbesondere bevorzugt beschrieben, wobei das Ausgangsmodul der Vorform-Vorrichtung einen Verjüngungswinkel ß_{Aus} im Bereich von 15° bis 120° aufweist, bevorzugt im Bereich von 45° bis 100°, besonders bevorzugt von im Bereich von 75° bis 90°.

Der Verjüngungswinkel ß_{Aus} ist bevorzugt der Winkel wie er vorstehend definiert wurde.

Der vorstehend beschriebene Aspekt der vorliegenden Erfindung hat den Vorteil, dass bei Verwendung der vorstehend beschriebenen Bereiche kein besonders großer Druck auf die Kautschukkomponenten ausgeübt werden muss, um die jeweilige Kautschukkomponente durch ihren Fließkanal zu pressen.

Bevorzugt ist eine Vorrichtung wie vorstehend beschrieben oder wie vorstehend als bevorzugt beschrieben, insbesondere wie vorstehend als besonders oder insbesondere bevorzugt beschrieben, wobei an der Kontaktfläche des Eingangsmoduls und/oder an der Kontaktfläche des Ausgangsmoduls eine Dichtung angebracht ist, wobei die Dichtung bevorzugt dazu geeignet ist, ein Austreten einer Kautschukmischung aus den Fließkanälen an der Kontaktfläche des Eingangsmoduls und an der Kontaktfläche des Ausgangsmoduls zu verhindern, während die Kontaktfläche des Eingangsmoduls mit der Kontaktfläche des Ausgangsmoduls in Kontakt steht.

Der vorstehend beschriebene Aspekt der vorliegenden Erfindung hat den Vorteil, dass ein Austreten einer Kautschukmischung aus den Fließkanälen zwischen dem Eingangs- und Ausgansmodul verhindert wird.

In besonderem Maße bevorzugt ist eine Vorform-Vorrichtung zum Positionieren von extrudierten Kautschukmischungen, dadurch gekennzeichnet, dass
- die Vorform-Vorrichtung aus einem Eingangsmodul und einem Ausgangsmodul besteht,
   wobei sowohl das Eingangsmodul als auch das Ausgangsmodul jeweils von vier Seitenflächen, einer Grundfläche und einer Kontaktfläche begrenzt werden und wobei
   - die Kontaktfläche des Eingangsmoduls geometrisch gleich mit der Kontaktfläche des Ausgangsmodul ist,
   - mindestens zwei gegenüberliegende Seitenflächen des Eingangsmoduls jeweils eine trapezförmige Fläche mit einem Verjüngungswinkel ß_{Ein} aufweisen und sich jede der zwei gegenüberliegenden Seitenflächen hin zur Kontaktfläche des Eingangsmoduls verjüngt,
   - mindestens zwei gegenüberliegende Seitenflächen des Ausgangsmodul jeweils eine trapezförmige Fläche mit einem Verjüngungswinkel ß_{Aus} aufweisen und sich jede der zwei gegenüberliegenden Seitenflächen hin zur Kontaktfläche des Ausgangsmodul verjüngt,
   - das Gesamtgewicht der Vorform-Vorrichtung mehr als 27 kg,
   - das Gesamtgewicht des Ausgangsmoduls der Vorform-Vorrichtung weniger 15 kg,
   - sowohl das Eingangsmodul als auch das Ausgangsmodul zumindest
   - einen zur Anordnung einer ersten Kautschukkomponente vorgesehenen ersten Fließkanal,
      und
   - einen zur Anordnung einer zweiten Kautschukkomponente vorgesehenen zweiten Fließkanal
      und
   - einen zur Anordnung einer dritten Kautschukkomponente vorgesehenen dritten Fließkanal
      und
   - einen zur Anordnung einer vierten Kautschukkomponente vorgesehenen vierten Fließkanal,
      und
   - einen zur Anordnung einer fünften Kautschukkomponente vorgesehenen fünften Fließkanal
   aufweist,
- sowohl das Eingangsmodul als auch das Ausgangsmodul der Vorform-Vorrichtung dazu geeignet sind, an der Aufnahmevorrichtung einer Extruderanlage befestigt zu werden,
- das Eingangsmodul der Vorform-Vorrichtung einen Verjüngungswinkel ß_{Ein} im Bereich von 30 bis 45° aufweist
   und
- das Ausgangsmodul der Vorform-Vorrichtung
   - eine Länge im Bereich von 450 mm bis 550 mm,
      und
   - eine Höhe im Bereich von 170 bis 220 mm
      und
   - eine Tiefe im Bereich von 50 mm bis 70 mm,
      und
   - einen Verjüngungswinkel ß_{Aus} im Bereich von 45° bis 100°,
      aufweist.

Die Erfindung betrifft auch ein Extruder-Form-System zum Ausformen von extrudierten Kautschukmischungen zu einem Gesamtkautschukelement, aufweisend eine Vorform-Vorrichtung nach einem der vorangehenden Ansprüche und mindestens eine Endform-Vorrichtung zum Ausformen von extrudierten Kautschukmischungen zu einem Gesamtkautschukelement.

Die vorstehend beschriebene Endform-Vorrichtung ist nachstehend anhand von Aspekten näher beschrieben.

Die vorstehend beschriebenen vorteilhaften Aspekte einer erfindungsgemäßen Vorform-Vorrichtung zum Positionieren von extrudierten Kautschukmischungen gelten auch für sämtliche Aspekte eines nachstehend beschriebenen Extruder-Form-Systems zum Ausformen von extrudierten Kautschukmischungen zu einem Gesamtkautschukelement und die nachstehend diskutierten vorteilhaften Aspekte erfindungsgemäßer Extruder-Form-Systeme gelten entsprechend für sämtliche Aspekte eines erfindungsgemäßen einer erfindungsgemäßen Vorform-Vorrichtung zum Positionieren von extrudierten Kautschukmischungen.

Bevorzugt ist ein Extruder-Form-System wie vorstehend beschrieben oder wie vorstehend als bevorzugt beschrieben, wobei das Ausgangsmodul der Vorform-Vorrichtung mittels einer Anbringungsvorrichtung an der Endform-Vorrichtung angebracht werden kann.

Der vorstehend beschriebene Aspekt der vorliegenden Erfindung hat den Vorteil, dass das Ausgangsmodul der erfindungsmäßen Vorform-Vorrichtung gleichzeitig mit der Endform-Vorrichtung aus dem erfindungsgemäßen Extruder-Form-System und ohne das Eingangsmodul herausgenommen werden kann und oder die Endform-Vorrichtung nicht noch einmal zusätzlich an einer andern Stelle der Extruderanlage befestigt werden muss. Beides dient unter anderem der Zeitersparnis beim Wechsel auf ein anderes Profil eines Gesamtkautschukelements.

Die Erfindung betrifft auch eine Extruderanlage umfassend
- eine Vorform-Vorrichtung wie vorstehend beschrieben oder wie vorstehend als bevorzugt beschrieben oder wie vorstehend als besonders oder insbesondere bevorzugt beschrieben
   und/oder
- eine Aufnahmevorrichtung r Aufnahme eines Extruder-Form-Systems wie vorstehend beschrieben oder wie vorstehend als bevorzugt beschrieben,
wobei die Aufnahmevorrichtung bevorzugt so ausgerichtet ist, dass
- das Eingangsmodul einer Vorform-Vorrichtung wie vorstehend beschrieben oder wie vorstehend als bevorzugt beschrieben oder wie vorstehend als besonders oder insbesondere bevorzugt beschrieben
und
- das Ausgangsmodul einer Vorform-Vorrichtung wie vorstehend beschrieben oder wie vorstehend als bevorzugt beschrieben oder wie vorstehend als besonders oder insbesondere bevorzugt beschrieben
in die Aufnahmevorrichtung eingeführt werden können, besonders bevorzugt passgenau in die Aufnahmevorrichtung eingeführt werden können. Besonders bevorzugt kann das Eingangsmodul aus der entgegengesetzten Richtung im Vergleich zur Aufnahmerichtung des Ausgangsmoduls in die Aufnahmevorrichtung aufgenommen werden. Ganz besonders bevorzugt kann das Ausgangsmodul entgegen der Extrusionsrichtung aufgenommen werden.

Der Ausdruck "passgenau einführen" bedeutet im Rahmen der vorliegende Erfindung bevorzugt, dass die Module entlang oder entgegengesetzt der Extrusionsrichtung in die Aufnahmevorrichtung einer erfindungsgemäßen Extruderanlage hineingeschoben werden können und in der finalen Position die Seitenflächen des Eingangs- und/oder des Ausgangsmoduls die Aufnahmevorrichtung berühren.

Figurenbeschreibung:
Es zeigt:
- Figur 1:: Schematisch Darstellung der Prozessanordnung der Extruderköpfe, der Vorform-Vorrichtung, der Endform-Vorrichtung sowie des resultierenden Gesamtkautschukelements in einer Extruderanlage
- Figur 2:: Schematisch Darstellung der Einführung des Eingangsmoduls und des Ausgangsmoduls einer erfindungsgemäßen Vorform-Vorrichtung in einer Aufnahmevorrichtung einer Extruderanlage
- Figur 3:: Schematisch Darstellung der Anordnung der Fließkanäle in einem Eingangsmodul und einem Ausgangsmodul einer erfindungsgemäßen Vorform-Vorrichtung
- Figur 4:: Draufsicht auf eine schematisch dargestellte Grundfläche eines Ausgangsmoduls einer erfindungsgemäßen Vorform-Vorrichtung
- Figur 5:: Draufsicht auf eine schematisch dargestellte Grundfläche eines Eingangsmoduls einer erfindungsgemäßen Vorform-Vorrichtung
- Figur 6:: Ansicht auf ein schematisch dargestelltes Ausgangsmodul einer erfindungsgemäßen Vorform-Vorrichtung
- Figur 7:: Ansicht auf ein schematisch dargestelltes Eingangsmodul einer erfindungsgemäßen Vorform-Vorrichtung
- Figur 8:: Schematische Darstellung des Verjüngungswinkels ß_{Ein} eines Eingangsmoduls einer erfindungsgemäßen Vorform-Vorrichtung
- Figur 9:: Schematische Darstellung des Verjüngungswinkels ß_{Aus} eines Ausgangsmoduls einer erfindungsgemäßen Vorform-Vorrichtung
- Figur 10:: Querschnittsansicht durch einen Abschnitt einer schematisch dargestellten Endform-Vorrichtung eines erfindungsgemäßen Extruder-Form-Systems in einer Ausführungsform, wobei die Querschnittebene senkrecht zur Extrusionsrichtung verläuft und die vertikal verschiebbaren Komponenten vertikal so verschoben sind, dass sie eine Austrittsöffnung bilden.

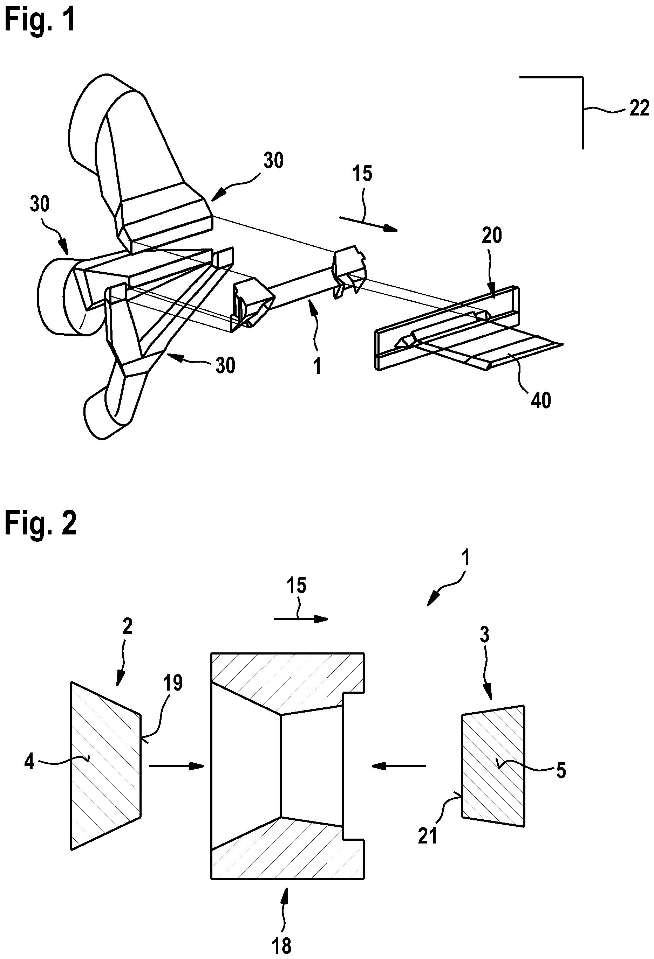

Figur 1 zeigt eine schematische Darstellung der Prozessanordnung in einer Extruderanlage 22. Zu sehen sind die Fließkanäle 30 mit den dazugehörigen Extruderköpfen, welche die verschiedenen Kautschukkomponenten zur Vorform-Vorrichtung 1 bringen und von dort aus in Extrusionsrichtung 15 weiter zur Endform-Vorrichtung 20 befördert werden. Die Endform-Vorrichtung 20 formt dabei das Gesamtkautschukelement 40 aus, welches als finales Produkt des Extrusionsprozesses resultiert.

Figur 2 zeigt eine schematische Darstellung der Einführung eines Ausgangsmoduls 3 und eines Eingangsmoduls 2 einer erfindungsgemäßen Vorform-Vorrichtung 1 in eine Aufnahmevorrichtung 18 einer Extruderanlage. Zu sehen ist, dass sich die Seitenfläche 4 des Eingangsmoduls hin zur Kontaktfläche 19 des Eingangsmoduls 2 verjüngt, wodurch das Eingangsmodul 2 passgenau in Extrusionsrichtung 15 in die Aufnahmevorrichtung 18 aufgenommen werden kann. Im Gegensatz dazu wird das Ausgangsmodul 3 der erfindungsgemäßen Vorform-Vorrichtung 1 entgegengesetzt der Extrusionsrichtung 15 in die Aufnahmevorrichtung 18 der Extruderanlage aufgenommen. Aufgrund dieser Konstruktion ist es möglich, das Ausgangsmodul 3 unabhängig und insbesondere ohne Ausbau des Eingangsmoduls 2 aus der Aufnahmevorrichtung 18 der Extruderanlage herauszunehmen. Die passgenaue Einführung des Ausgangsmoduls 3 wird ebenfalls durch die sich verjüngende Seitenfläche 5 des Ausgangsmoduls 3 gewährleistet wie dies vorstehend für das Eingangsmodul 2 beschrieben ist.

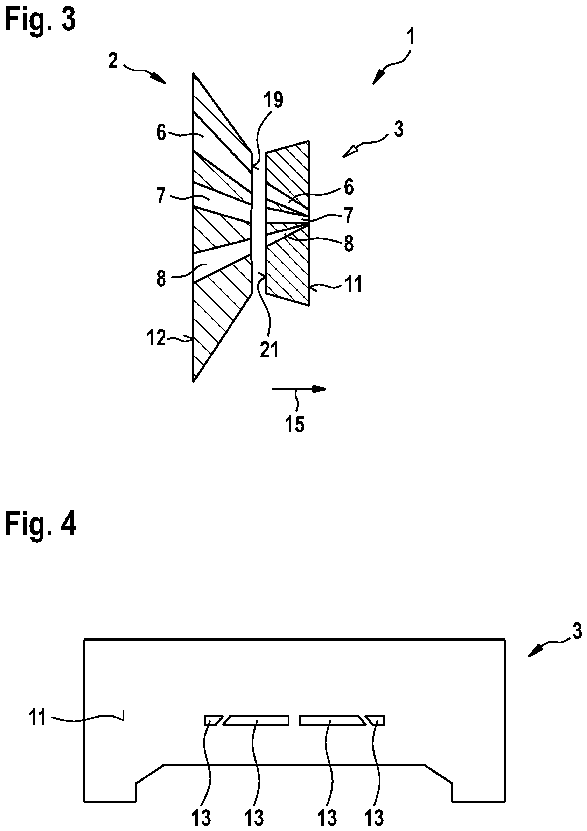

Figur 3 zeigt eine schematische Darstellung eines Querschnitts durch eine erfindungsgemäße Vorform-Vorrichtung 1, bestehend aus einem Eingangsmodul 2 und einem Ausgangsmodul 3, gemäß einer weiteren Ausführungsform, wobei die Ebene des Querschnitts parallel zur Extrusionsrichtung 15 verläuft. Das Ausgangsmodul 3 und das Eingangsmodul 2 der erfindungsgemäßen Vorform-Vorrichtung 1 sind dabei in Figur 2 so angeordnet, dass sich die Kontaktfläche 19 des Eingangsmoduls 2 unmittelbar gegenüber der Kontaktfläche 21 des Ausgangsmoduls 3 befindet. Es kann Figur 3 entnommen werden, dass der erste, der zweite und der dritte Fließkanal 6, 7, 8 die verschiedenen Kautschukelemente von der Grundfläche 12 des Eingangsmoduls 2 hin zur Grundfläche 13 des Ausgangsmoduls 3 zusammenführen, damit die verschiedenen Kautschukelemente sich an der richtigen Position befinden, um anschließend in eine Endform-Vorrichtung (nicht gezeigt) zum Ausformen des Gesamtkautschukelements überführt werden zu können. Die in Figur 3 gezeigte erfindungsgemäße Vorform-Vorrichtung 1 positioniert daher die einzelnen Kautschukkomponenten, welche durch die Fließkanäle 6, 7, 8 gepresst werden und jeweils eine extrudierte Kautschukmischung umfasst.

Figur 4 zeigt eine schematische Darstellung der Ansicht auf die Seite des Ausgangsmoduls 3 einer erfindungsgemäßen Vorform-Vorrichtung 1 gemäß einer weiteren Ausführungsform, welche die Grundfläche 11 des Ausgangsmoduls 3 umfasst. Zu sehen sind die Austrittsöffnungen 13 der Fließkanäle 6, 7, 8 des Ausgangsmoduls 3, welche in der Grundfläche 11 des Ausgangsmoduls 3 liegen. Die Grundfläche 11 des in Figur 4 gezeigten Ausgangsmoduls 3 einer erfindungsgemäßen Vorform-Vorrichtung 1 ist eckig. Die beiden äußeren Austrittsöffnungen 13 der Fließkanäle 17 des Ausgangsmoduls 3 stellen im Praxisfall häufig die Austrittsöffnungen 13 der Fließkanäle 17 für die Wing-Komponenten eines Laufstreifens dar, während die mittleren Austrittsöffnungen 13 der Fließkanäle 17 des Ausgangsmoduls 3 häufig die Base-Komponente positionieren. Ein Laufstreifen ist ein Beispiel eines Gesamtkautschukelements.

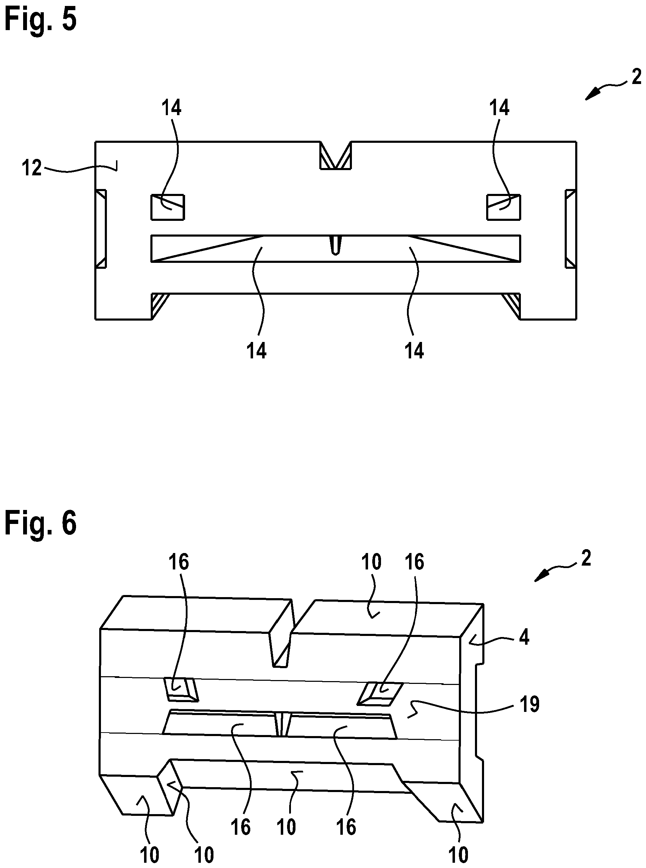

Figur 5 zeigt eine schematische Darstellung der Ansicht auf ein Eingangsmodul 2 einer erfindungsgemäßen Vorform-Vorrichtung 1, wobei die Seite des Eingangsmoduls 2 dargestellt wird, welche die Grundfläche 12 des Eingangsmoduls 2 umfasst. Gezeigt sind die verschiedenen Eintrittsöffnungen 14 der Fließkanäle des Eingangsmoduls 2, durch welche die einzelnen Kautschukkomponenten aus den Extruderköpfen der Extruderanlage (nicht gezeigt) in das Eingangsmodul 2 einer erfindungsgemäßen Vorform-Vorrichtung 1 gepresst werden. Die beiden äußeren Eintrittsöffnungen 14 der Fließkanäle 16 des Eingangsmoduls 2 in der Grundfläche 12 des Eingangsmoduls 2 stellen dabei im Praxisfall häufig die Eintrittsöffnungen 14 für solche Fließkanäle 16 dar, welche die Wing-Komponenten eines Laufstreifens befördern. Die andere gezeigte Eintrittsöffnung 14 in Figur 5 stellt die Eintrittsöffnung des Fließkanals 16 für die Base-Komponente des Laufstreifens dar. Das in Figur 5 gezeigte Eingangsmodul 2 einer erfindungsgemäßen Vorform-Vorrichtung 1 umfasst deshalb drei Fließkanäle für maximal drei verschiedene Kautschukkomponenten. Ein Laufstreifen weist häufig drei Kautschukkomponenten auf und ist daher ein Beispiel eines Gesamtkautschukelements.

Figur 6 zeigt eine schematische Darstellung der Ansicht auf ein Eingangsmodul 2 einer erfindungsgemäßen Vorform-Vorrichtung 1, wobei die Seite des Eingangsmoduls 2 dargestellt wird, welche die Kontaktfläche 19 des Eingangsmoduls 2 umfasst. Zu sehen ist die Kontaktfläche 19 des Eingangsmoduls 2 einer erfindungsgemäßen Vorform-Vorrichtung 1 sowie die verschiedenen Fließkanäle 16 des Eingangsmoduls 2, welche die Fließkanäle von den Extruderköpfen der Extruderanlage hin zu den Fließkanälen des Ausgangsmoduls einer erfindungsgemäßen Vorform-Vorrichtung führen sollen. Zu sehen sind auch verschiedene Seitenflächen 10 des Eingangsmoduls 2 sowie die Seitenfläche 4 des Eingangsmoduls 2, welche eine trapezförmige Fläche aufweist, die sich hin zur Kontaktfläche 19 verjüngt. Aufgrund dieser Verjüngung kann das Eingangsmodul 2 in der entgegengesetzten Richtung in die Aufnahmevorrichtung einer erfindungsgemäßen Extruderanlage aufgenommen werden, wobei sich die entgegengesetzte Richtung im Vergleich zur Aufnahmevorrichtung des Ausgangsmoduls bezieht.

Figur 7 zeigt eine schematische Darstellung der Ansicht auf die Seite des Ausgangsmoduls 3 einer erfindungsgemäßen Vorform-Vorrichtung 1 gemäß einer weiteren Ausführungsform, welche die Kontaktfläche 12 des Ausgangsmoduls 3 umfasst. Zu sehen ist die Kontaktfläche 21 des Ausgangsmoduls 3 einer erfindungsgemäßen Vorform-Vorrichtung 1 sowie die verschiedenen Fließkanäle 17 des Ausgangsmoduls 3, welche die extrudierten Kautschukmischungen von den Fließkanälen des Eingangsmoduls einer erfindungsgemäßen Vorform-Vorrichtung hin zu einer Endform-Vorrichtung führen sollen. Zu sehen sind auch verschiedene Seitenflächen 9 des Ausgangsmoduls 3 sowie die Seitenfläche 5 des Ausgangsmoduls 3, welche eine trapezförmige Fläche aufweist, die sich hin zur Kontaktfläche 21 verjüngt. Aufgrund dieser Verjüngung kann das Ausgangsmoduls 3 in der entgegengesetzten Richtung in die Aufnahmevorrichtung einer erfindungsgemäßen Extruderanlage aufgenommen werden, wobei sich die entgegengesetzte Richtung im Vergleich zur Aufnahmevorrichtung des Eingangsmoduls bezieht.

Figur 8 zeigt eine schematische Darstellung der Seitenansicht auf ein Eingangsmodul 2 einer erfindungsgemäßen Vorform-Vorrichtung 1, wobei die Seitenfläche 4 mit trapezförmiger Fläche des Eingangsmoduls 2 dargestellt ist. Gezeigt ist auch der Verjüngungswinkel ß_{Ein} 23.

Figur 9 zeigt eine schematische Darstellung der Seitenansicht auf ein Ausgangsmodul 3 einer erfindungsgemäßen Vorform-Vorrichtung 1, wobei die Seitenfläche 5 mit trapezförmiger Fläche des Ausgangsmoduls 3 dargestellt ist. Gezeigt ist auch der Verjüngungswinkel ß_{Aus} 24.

Figur 10 zeigt eine schematische Darstellung eines Abschnittes einer Endform-Vorrichtung 20 eines erfindungsgemäßen Extruder-Form-Systems in einer Ausführungsform, wobei die Querschnittebene senkrecht zur Extrusionsrichtung 15 verläuft. Einige der vertikal verschiebbaren Komponenten 25 sind dabei vertikal verschoben im Vergleich zur angezeigten ersten endständigen vertikal verschiebbaren Komponente 26. In der in Figur 10 gezeigten Ausführungsform der vorliegenden Erfindung befindet sich die erste endständige vertikal verschiebbare Komponente 26 in der untersten Position, so dass an dieser Stelle keine Kautschukmischung austreten kann. In Figur 10 ist auch gezeigt, dass aufgrund der vorstehend beschriebenen vertikal nach oben verschobenen Komponenten 25 eine Austrittsöffnung 31 des Fließkanals der Endform-Vorrichtung entsteht. Es ist ersichtlich, dass sich das Profil des Gesamtkautschukelements 40 verändert, je nachdem wie die vertikal verschiebbaren Komponenten 25 verschoben worden sind. Zudem sind in Figur 10 die Extrusionsrichtung 15 und eine Arretierungsvorrichtung 10 zur Fixierung der vertikal verschiebbaren Komponenten 25 gezeigt. Die Arretierungsvorrichtung 10 wird dabei derart an die erste endständige vertikal verschiebbare Komponente 26 gepresst, dass der entstehende Druck auf die erste verschiebbare Komponente 26 und die sich dahinter befindlichen vertikal verschiebbaren Komponenten 25 derart groß ist, dass die einzelnen vertikal verschiebbaren Komponenten 25 in ihrer jeweiligen voreingestellten Position verharren. Die Kraft muss dabei ausreichend sein, damit die verschiedenen vertikal verschiebbaren Komponenten auch während des Betriebs nicht aufgrund des hohen Druckes der Kautschukmischungen beim Ausformen nicht verschoben werden. Bevorzugt ist die Arretierungsvorrichtung 29 eine Schraube wie vorstehend in einer Ausführungsform beschrieben und wird mit maximal mit einem Anzugsmoment von 20 Nm angezogen.

### Bezugszeichenliste:

1 Vorform-Vorrichtung
2 Eingangsmodul
3 Ausgangsmodul
4 Seitenflächen des Eingangsmoduls mit trapezförmige Fläche
5 Seitenfläche des Ausgangsmoduls mit trapezförmige Fläche
6 erster Fließkanal
7 zweiter Fließkanal
8 dritter Fließkanal
9 Seitenfläche des Ausgangsmoduls
10 Seitenfläche des Eingangsmoduls
11 Grundfläche des Ausgangsmoduls
12 Grundfläche des Eingangsmoduls
13 Austrittsöffnung eines Fließkanals des Ausgangsmoduls
14 Eintrittsöffnung eines Fließkanals des Eingangsmoduls
15 Extrusionsrichtung
16 Fließkanal des Eingangsmoduls
17 Fließkanal des Ausgangsmoduls
18 Aufnahmevorrichtung der Extruderanlage
19 Kontaktfläche des Eingangsmoduls
20 Endform-Vorrichtung
21 Kontaktfläche des Ausgangsmoduls
22 Extruderanlage
23 Verjüngungswinkel ß_{Ein}
24 Verjüngungswinkel ß_{Aus}
25 vertikal verschiebbare Komponente
26 erste endständige vertikal verschiebbare Komponente
27 oberes Modul der Endform-Vorrichtung
28 unteres Modul der Endform-Vorrichtung
29 Arretierungsvorrichtung zur Fixierung der vertikal verschiebbaren Komponenten
30 Fließkanäle der Extruderköpfe
31 Austrittsöffnung des Fließkanals der Endform-Vorrichtung
40 Gesamtkautschukelement

## Patentansprüche

1. Vorform-Vorrichtung zum Positionieren von extrudierten Kautschukmischungen, wobei
- die Vorform-Vorrichtung (1) aus einem Eingangsmodul (2) und einem Ausgangsmodul (3) besteht,
wobei sowohl das Eingangsmodul (2) als auch das Ausgangsmodul (3) jeweils eine Grundfläche (11, 12) und eine der Grundfläche gegenüberliegende Kontaktfläche (19, 21) aufweisen und wobei
- die Fläche der Kontaktfläche (19) des Eingangsmoduls (2) kleiner ist als die Fläche der Grundfläche (12) des Eingangsmoduls (2),
**dadurch gekennzeichnet, dass**
sowohl das Eingangsmodul (2) als auch das Ausgangsmodul (3) zumindest
- einen zur Anordnung einer ersten Kautschukkomponente vorgesehenen ersten Fließkanal (6),
- einen zur Anordnung einer zweiten Kautschukkomponente vorgesehenen zweiten Fließkanal (7)
und
- einen zur Anordnung einer dritten Kautschukkomponente vorgesehenen dritten Fließkanal (8)
aufweist.

2. Vorrichtung nach Anspruch 1, wobei sowohl das Eingangsmodul (2) als auch das Ausgangsmodul (3) jeweils mindestens zwei gegenüberliegende Seitenflächen (4, 5), eine Grundfläche (11, 12) und eine der Grundfläche gegenüberliegende Kontaktfläche (19, 21) aufweisen und wobei
- die der Kontaktfläche (19) des Eingangsmoduls (2) kongruent mit der Kontaktfläche (21) des Ausgangsmoduls (3) ist
und
- die zwei gegenüberliegende Seitenflächen (4) des Eingangsmoduls (2) jeweils eine trapezförmige Fläche mit einem Verjüngungswinkel ß_{Ein} aufweisen und sich jede der zwei gegenüberliegenden Seitenflächen (4) hin zur Kontaktfläche (19) des Eingangsmoduls (2) verjüngt
und
- die zwei gegenüberliegende Seitenflächen (5) des Ausgangsmodul (3) jeweils eine trapezförmige Fläche mit einem Verjüngungswinkel ß_{Aus} aufweisen und sich jede der zwei gegenüberliegenden Seitenflächen (5) hin zur Kontaktfläche (21) des Ausgangsmodul (3) verjüngt.

3. Vorrichtung nach einem der vorangehenden Ansprüche, wobei
- das Gesamtgewicht der Vorform-Vorrichtung (1) mehr als 25 kg beträgt, bevorzugt mehr als 27 kg,
und
- das Gesamtgewicht des Ausgangsmoduls (3) der Vorform-Vorrichtung (1) weniger als 20 kg beträgt, bevorzugt weniger als 15 kg.

4. Vorrichtung nach Anspruch 1, wobei sowohl das Eingangsmodul (2) als auch das Ausgangsmodul (3) zumindest
- einen zur Anordnung einer vierten Kautschukkomponente vorgesehenen vierten Fließkanal,
und/oder
- einen zur Anordnung einer fünften Kautschukkomponente vorgesehenen fünften Fließkanal
aufweist.

5. Vorrichtung nach einem der vorangehenden Ansprüche, wobei das Eingangsmodul (2) und das Ausgangsmodul (3) der Vorform-Vorrichtung dazu geeignet sind, an der Aufnahmevorrichtung (18) einer Extruderanlage (22) befestigt zu werden.

6. Vorrichtung nach einem der vorangehenden Ansprüche, wobei das Eingangsmodul (2) der Vorform-Vorrichtung
- eine Länge im Bereich von 300 mm bis 1200 mm, bevorzugt im Bereich von 400 mm bis 800 mm, besonders bevorzugt im Bereich von 450 mm bis 550 mm, ganz besonders bevorzugt 500 mm,
und/oder
- eine Höhe im Bereich von 60 mm bis 300 mm, bevorzugt im Bereich von 80 bis 270 mm, ganz besonders bevorzugt im Bereich von 120 bis 250 mm,
und/oder
- eine Tiefe im Bereich von 40 mm bis 150 mm, bevorzugt im Bereich von 50 bis 100 mm, besonders bevorzugt im Bereich von 60 mm,
und/oder
- einen Verjüngungswinkel ß_{Ein} (23) im Bereich von 30 bis 60°, besonders bevorzugt im Bereich von 30 bis 45°, bevorzugt von 30,5°,
aufweist.

7. Vorrichtung nach einem der vorangehenden Ansprüche, wobei das Ausgangsmodul (3) der Vorform-Vorrichtung (1)
- eine Länge im Bereich von 300 mm bis 1200 mm, bevorzugt im Bereich von 400 mm bis 800 mm, besonders bevorzugt im Bereich von 450 mm bis 550 mm, ganz besonders bevorzugt 500 mm,
und/oder
- eine Höhe im Bereich von 60 mm bis 300 mm, bevorzugt im Bereich von 100 bis 250 mm, ganz besonders bevorzugt im Bereich von 170 bis 220 mm
und/oder
- eine Tiefe im Bereich von 40 mm bis 150 mm, bevorzugt im Bereich von 50 bis 100 mm, besonders bevorzugt im Bereich von 50 mm bis 70 mm
und/oder
- einen Verjüngungswinkel ß_{Aus} (24) im Bereich von 15° bis 120°, bevorzugt im Bereich von 45° bis 100°, besonders bevorzugt von im Bereich von 75° bis 90°
aufweist.

8. Vorrichtung nach einem der vorangehenden Ansprüche, wobei an der Kontaktfläche (4) des Eingangsmoduls (2) oder an der Kontaktfläche (5) des Ausgangsmoduls (3) eine Dichtung angebracht ist.

9. Extruder-Form-System zum Ausformen von extrudierten Kautschukmischungen zu einem Gesamtkautschukelement (40), aufweisend eine Vorform-Vorrichtung nach einem der vorangehenden Ansprüche und mindestens eine Endform-Vorrichtung zum Ausformen von extrudierten Kautschukmischungen zu einem Gesamtkautschukelement (40).

10. Extruderanlage umfassend eine Vorform-Vorrichtung nach einem der Ansprüche 1 bis 8 und/oder eine Aufnahmevorrichtung (18) zur Aufnahme eines Extruder-Form-Systems nach Anspruch 9, wobei die Aufnahmevorrichtung (18) bevorzugt so ausgerichtet ist, dass das Eingangsmodul (2) einer Vorform-Vorrichtung nach einem der Ansprüche 1 bis 8 und das Ausgangsmodul (3) einer Vorform-Vorrichtung nach einem der Ansprüche 1 bis 8 in die Aufnahmevorrichtung (18) eingeführt werden können.

## Claims

1. Preform device for positioning extruded rubber mixtures,
wherein
- the preform device (1) consists of an inlet module (2) and an outlet module (3),
wherein both the inlet module (2) and the outlet module (3) each have a base surface (11, 12) and a contact face (19, 21) opposite the base surface, and wherein
- the surface of the contact face (19) of the inlet module (2) is smaller than the surface of the base surface (12) of the inlet module (2),
**characterized in that**
both the inlet module (2) and the outlet module (3) have at least
- a first flow duct (6) provided for the arrangement of a first rubber component,
- a second flow duct (7) provided for the arrangement of a second rubber component,
and
- a third flow duct (8) provided for the arrangement of a third rubber component.

2. Device according to Claim 1, wherein both the inlet module (2) and the outlet module (3) each have at least two opposing side faces (4, 5), a base surface (11, 12) and a contact face (19, 21) opposite the base surface, and wherein
- the contact face (19) of the inlet module (2) is congruent with the contact face (21) of the outlet module (3),
and
- the two opposing side faces (4) of the inlet module (2) each have a trapezoid surface with a taper angle β_{In}, and each of the two opposing side faces (4) tapers towards the contact face (19) of the inlet module (2),
and
- the two opposing side faces (5) of the outlet module (3) each have a trapezoid surface with a taper angle β_{Out}, and each of the two opposing side faces (5) tapers towards the contact face (21) of the outlet module (3).

3. Device according to either of the preceding claims, wherein
- the total weight of the preform device (1) is more than 25 kg, preferably more than 27 kg,
and
- the total weight of the outlet module (3) of the preform device (1) is less than 20 kg, preferably less than 15 kg.

4. Device according to Claim 1, wherein both the inlet module (2) and the outlet module (3) have at least
- a fourth flow duct provided for the arrangement of a fourth rubber component,
and/or
- a fifth flow duct provided for the arrangement of a fifth rubber component.

5. Device according to any of the preceding claims, wherein the inlet module (2) and the outlet module (3) of the preform device are suitable for attachment to the receiving device (18) of an extruder system (22).

6. Device according to any of the preceding claims, wherein the inlet module (2) of the preform device has
- a length in the range from 300 mm to 1200 mm, preferably in the range from 400 mm to 800 mm, particularly preferably in the range from 450 mm to 550 mm, very particularly preferably 500 mm,
and/or
- a height in the range from 60 mm to 300 mm, preferably in the range from 80 to 270 mm, very particularly preferably in the range from 120 to 250 mm,
and/or
- a depth in the range from 40 mm to 150 mm, preferably in the range from 50 to 100 mm, particularly preferably in the range of 60 mm,
and/or
- a taper angle β_{In} (23) in the range from 30 to 60°, particularly preferably in the range from 30 to 45°, preferably 30.5°.

7. Device according to any of the preceding claims, wherein the outlet module (3) of the preform device (1) has
- a length in the range from 300 mm to 1200 mm, preferably in the range from 400 mm to 800 mm, particularly preferably in the range from 450 mm to 550 mm, very particularly preferably 500 mm,
and/or
- a height in the range from 60 mm to 300 mm, preferably in the range from 100 to 250 mm, very particularly preferably in the range from 170 to 220 mm,
and/or
- a depth in the range from 40 mm to 150 mm, preferably in the range from 50 to 100 mm, particularly preferably in the range from 50 mm to 70 mm,
and/or
- a taper angle β_{Out} (24) in the range from 15° to 120°, preferably in the range from 45° to 100°, particularly preferably in the range from 75° to 90°.

8. Device according to any of the preceding claims, wherein a seal is attached to the contact face (4) of the inlet module (2) or to the contact face (5) of the outlet module (3).

9. Extruder mould system for moulding extruded rubber mixtures into a complete rubber element (40), having a preform device according to any of the preceding claims, and at least one final forming device for moulding extruded rubber mixtures into a complete rubber element (40).

10. Extruder system comprising a preform device according to any of Claims 1 to 8 and/or a receiving device (18) for receiving an extruder mould system according to Claim 9, wherein the receiving device (18) is preferably configured such that the inlet module (2) of a preform device according to any of Claims 1 to 8, and the outlet module (3) of a preform device according to any of Claims 1 to 8, can be introduced into the receiving device (18).

## Revendications

1. Dispositif de pré-façonnage pour le positionnement de mélanges de caoutchouc extrudés,
- le dispositif de pré-façonnage (1) étant constitué d'un module d'entrée (2) et d'un module de sortie (3),
aussi bien le module d'entrée (2) que le module de sortie (3) présentant chacun une surface de base (11, 12) et une surface de contact (19, 21) opposée à la surface de base, et
- la surface de la surface de contact (19) du module d'entrée (2) étant inférieure à la surface de la surface de base (12) du module d'entrée (2),
**caractérisé en ce que**
aussi bien le module d'entrée (2) que le module de sortie (3) présentent au moins
- un premier canal d'écoulement (6) prévu pour l'agencement d'un premier composant en caoutchouc,
- un deuxième canal d'écoulement (7) prévu pour l'agencement d'un deuxième composant en caoutchouc,
et
- un troisième canal d'écoulement (8) prévu pour l'agencement d'un troisième composant en caoutchouc.

2. Dispositif selon la revendication 1, dans lequel aussi bien le module d'entrée (2) que le module de sortie (3) présentent chacun au moins deux surfaces latérales opposées (4, 5), une surface de base (11, 12) et une surface de contact (19, 21) opposée à la surface de base, et dans lequel
- la surface de contact (19) du module d'entrée (2) est congruente avec la surface de contact (21) du module de sortie (3)
et
- les deux surfaces latérales opposées (4) du module d'entrée (2) présentent chacune une surface trapézoïdale avec un angle de rétrécissement βₑᵢₙ et chacune des deux surfaces latérales opposées (4) se rétrécit vers la surface de contact (19) du module d'entrée (2)
et
- les deux surfaces latérales opposées (5) du module de sortie (3) présentent chacune une surface trapézoïdale avec un angle de rétrécissement βₐᵤₛ et chacune des deux surfaces latérales opposées (5) se rétrécit vers la surface de contact (21) du module de sortie (3).

3. Dispositif selon l'une quelconque des revendications précédentes, dans lequel
- le poids total du dispositif de pré-façonnage (1) est supérieur à 25 kg, de préférence supérieur à 27 kg,
et
- le poids total du module de sortie (3) du dispositif de pré-façonnage (1) est inférieur à 20 kg, de préférence inférieur à 15 kg.

4. Dispositif selon la revendication 1, dans lequel aussi bien le module d'entrée (2) que le module de sortie (3) présentent au moins
- un quatrième canal d'écoulement prévu pour l'agencement d'un quatrième composant en caoutchouc,
et/ou
- un cinquième canal d'écoulement prévu pour l'agencement d'un cinquième composant en caoutchouc.

5. Dispositif selon l'une quelconque des revendications précédentes, dans lequel le module d'entrée (2) et le module de sortie (3) du dispositif de pré-façonnage sont adaptés pour être fixés sur le dispositif de réception (18) d'une installation d'extrusion (22).

6. Dispositif selon l'une quelconque des revendications précédentes, dans lequel le module d'entrée (2) du dispositif de pré-façonnage présente
- une longueur dans la plage allant de 300 mm à 1 200 mm, de préférence dans la plage allant de 400 mm à 800 mm, de manière particulièrement préférée dans la plage allant de 450 mm à 550 mm, de manière tout particulièrement préférée 500 mm,
et/ou
- une hauteur dans la plage allant de 60 mm à 300 mm, de préférence dans la plage allant de 80 à 270 mm, de manière tout particulièrement préférée dans la plage allant de 120 à 250 mm,
et/ou
- une profondeur dans la plage allant de 40 mm à 150 mm, de préférence dans la plage allant de 50 à 100 mm, de manière particulièrement préférée dans la plage allant de 60 mm,
et/ou
- un angle de rétrécissement βₑᵢₙ (23) dans la plage allant de 30 à 60°, de manière particulièrement préférée dans la plage allant de 30 à 45°, de préférence de 30,5°.

7. Dispositif selon l'une quelconque des revendications précédentes, dans lequel le module de sortie (3) du dispositif de pré-façonnage (1) présente
- une longueur dans la plage allant de 300 mm à 1 200 mm, de préférence dans la plage allant de 400 mm à 800 mm, de manière particulièrement préférée dans la plage allant de 450 mm à 550 mm, de manière tout particulièrement préférée 500 mm,
et/ou
- une hauteur dans la plage allant de 60 mm à 300 mm, de préférence dans la plage allant de 100 à 250 mm, de manière tout particulièrement préférée dans la plage allant de 170 à 220 mm
et/ou
- une profondeur dans la plage allant de 40 mm à 150 mm, de préférence dans la plage allant de 50 à 100 mm, de manière particulièrement préférée dans la plage allant de 50 mm à 70 mm
et/ou
- un angle de rétrécissement βₐᵤₛ (24) dans la plage allant de 15° à 120°, de préférence dans la plage allant de 45° à 100°, de manière particulièrement préférée dans la plage allant de 75° à 90°.

8. Dispositif selon l'une quelconque des revendications précédentes, dans lequel un joint d'étanchéité est disposé sur la surface de contact (4) du module d'entrée (2) ou sur la surface de contact (5) du module de sortie (3).

9. Système de façonnage par extrusion pour le façonnage de mélanges de caoutchouc extrudés en un élément de caoutchouc total (40), comprenant un dispositif de pré-façonnage selon l'une quelconque des revendications précédentes et au moins un dispositif de façonnage final pour le façonnage de mélanges de caoutchouc extrudés en un élément de caoutchouc total (40).

10. Installation d'extrusion comprenant un dispositif de pré-façonnage selon l'une quelconque des revendications 1 à 8 et/ou un dispositif de réception (18) pour la réception d'un système de façonnage par extrusion selon la revendication 9, le dispositif de réception (18) étant de préférence orienté de telle sorte que le module d'entrée (2) d'un dispositif de pré-façonnage selon l'une quelconque des revendications 1 à 8 et le module de sortie (3) d'un dispositif de pré-façonnage selon l'une quelconque des revendications 1 à 8 peuvent être introduits dans le dispositif de réception (18).
